# DEMANDE DE BREVET EUROPEEN

(11) **EP 4 831 144 A1**
(43) Date de publication de la demande: **28.10.2026**
(21) Numéro de dépôt: 25172243.5
(22) Date de dépôt: 24.04.2025
(51) Int. Cl.: C04B 35/486, C04B 35/488, C04B 35/638, C04B 35/645, G04B 19/12, G04B 37/22, G04B 39/00

(54) **COMPOSANT HORLOGER DE COULEUR ORANGE À BASE DE ZIRCONE ; ET PROCÉDÉ DE FABRICATION D'UN COMPOSANT HORLOGER DE COULEUR ORANGE**

(71) Demandeur: Comadur S.A., 2400 Le Locle (CH)
(72) Inventeur: ACTIS-DATTA, Arnaud, 2854 Bassecourt (CH); ALAUDINOV, Bagomed, 1870 Monthey (CH)
(74) Mandataire: ICB SA

(57) **Abrégé**

L'invention concerne un composant horloger en céramique orange, le composant comprenant de la zircone présente en poids entre 87% et 98.8%, de l'oxyde d'yttrium présent en poids entre 1 et 6%, de l'oxyde d'aluminium présent en poids entre 0.1% et 5%, de l'oxyde de cérium présent en poids entre 0.05% et 1%, et de l'oxyde de magnésium présent en poids entre 0.05% et 1%.

## Description

### DOMAINE TECHNIQUE

La présente invention se rapporte à un procédé de fabrication d'un composant de couleur orange à base de zircone, réalisé par frittage.

L'invention concerne également un composant orange à base de zircone notamment obtenu selon le procédé ci-dessus.

### ART ANTERIEUR

Il est déjà connu d'incorporer des agents colorants ou pigments tels que le sulfure de cadmium (CdS), le séléniure de cadmium (CdSe) et le sulfoséléniure de Cadmium dans des matériaux céramique pour obtenir des articles en céramique orange/rouge utilisés par exemple pour réaliser des émaux, des glaçures et des récipients à usage domestique ou des revêtements de sols.

L'utilisation de ce type d'agents colorants présente de nombreux inconvénients dès lors que l'on souhaite incorporer ce type d'agents colorants dans des céramiques industrielles notamment à base de zircone frittée.

En effet, ces agents colorants manquent de stabilité à température élevée et ne présentent leurs caractéristiques colorantes que jusqu'à 1000 ou 1200°C. Cela limite grandement l'utilisation de ce type d'agents colorants et ne permet notamment pas la réalisation d'articles à base de zircone frittée, les températures de frittage de la zircone étant dans tous les cas supérieures à 1100°C.

Par ailleurs, l'utilisation de ces types d'agents colorants, qui contiennent des métaux lourds, dans des objets destinés à être en contact avec la peau d'un utilisateur tel qu'une boîte de montre est sinon interdite légalement, du moins fortement déconseillée.

De plus, les agents colorants de ce type, disponibles commercialement ont une granulométrie incompatible pour l'obtention d'un mélange homogène avec la poudre de zircone.

### RESUME DE L'INVENTION

La présente invention a pour objet de pallier aux désavantages précités en proposant un procédé de fabrication d'un composant orange à base de zircone frittée et d'autre part un tel composant notamment obtenu selon ce procédé, ce composant ayant des propriétés mécaniques satisfaisantes tout en présentant une coloration orange à cœur et en surface.

À cet effet, la présente invention se rapporte à un composant horloger en céramique orange, le composant comprenant de la zircone présente en poids entre 87% et 98.8%, de l'oxyde d'yttrium présent en poids entre 1% et 6%, de l'oxyde d'aluminium présent en poids entre 0.1% et 5%, de l'oxyde de cérium présent en poids entre 0.05% et 1%, et de l'oxyde de magnésium présent en poids entre 0.05% et 1%.

L'invention se rapporte aussi à un procédé de fabrication d'un composant en céramique de couleur orange.

Plus précisément, selon un premier mode de réalisation, le procédé de fabrication d'un composant horloger de couleur orange à base de zircone selon l'invention comprend les étapes suivantes :
- réaliser un premier mélange comprenant une poudre de zircone, 1% à 6% en poids d'oxyde d'yttrium, 0.1% à 5% d'oxyde d'aluminium, 0.05% à 1% en poids d'oxyde de cérium, et 0.05% à 1% en poids d'oxyde de magnésium ;
- réaliser un deuxième mélange comprenant le premier mélange et au moins un liant ;
- réaliser un mélange poudre ou un mélange granulé à partir du deuxième mélange ;
- former un corps vert à partir du mélange poudre ou mélange granulé ;
- délianter le corps vert pour obtenir un corps brun ;
- fritter le corps brun sous une atmosphère de gaz neutre pour former une ébauche de couleur orange ;
- usiner l'ébauche obtenue pour obtenir le composant horloger en céramique de couleur orange.

Selon un deuxième mode de réalisation, le procédé de fabrication d'un composant horloger de couleur orange à base de zircone selon l'invention comprend les étapes suivantes :
- réaliser un mélange comprenant une poudre de zircone, 1 à 6% en poids d'oxyde d'yttrium, 0.1% à 5% d'oxyde d'aluminium, 0.05% à 1% en poids d'oxyde de cérium, et 0.05% à 1% en poids d'oxyde de magnésium ;
- mettre à disposition un moule ;
- déposer le mélange de poudres dans le moule ;
- effectuer un frittage de type flash ou SPS, opéré sous une atmosphère de gaz neutre à une pression de frittage comprise entre 5N/mm2 et 250N/mm2, pendant un temps de cycle complet compris entre 10 min et 180 min, de sorte à former un composant en céramique de couleur orange ;
- démouler le composant de couleur orange obtenu ;
- effectuer une finition du composant de couleur orange en céramique ;
- usiner l'ébauche obtenue pour obtenir le composant horloger en céramique de couleur orange.

La présente invention se rapporte également à un composant horloger en céramique orange issu du procédé de fabrication.

Conformément à d'autres variantes avantageuses de l'invention :
- l'étape de frittage selon le premier mode de réalisation est effectuée à une température comprise entre 1250°C et 1650°C pendant un temps compris entre 30 minutes et 4 heures ;
- l'étape de frittage selon le second mode de réalisation est effectuée à une température comprise entre 600°C et 1650°C pendant un temps compris entre 10 minutes et 180 minutes ;
- le gaz neutre est choisi parmi l'argon, l'azote ou l'hélium, ou un mélange d'au moins deux de ces gaz neutres ;
- l'étape de déliantage est un déliantage thermique ou un déliantage solvant ;
- l'étape de déliantage thermique est effectuée sous air.

L'invention concerne également un composant en céramique présentant une couleur orange.

Un tel composant horloger est un composant horloger d'habillage ou du mouvement, et est choisi parmi la liste comprenant une carrure, un fond, une lunette, un insert de lunette, un poussoir, une couronne, un maillon de bracelet, une boucle, un cadran, une aiguille, un index de cadran, une masse oscillante et une platine.

D'autres caractéristiques et avantages de la présente invention apparaîtront dans la description suivante d'un mode de réalisation préféré, présenté à titre d'exemple non limitatif en référence aux dessins annexés.

### DESCRIPTION DETAILLEE

La présente invention se rapporte à un composant horloger en céramique tel qu'un composant d'habillage en horlogerie ou en bijouterie, ou encore un composant horloger présentant dans sa masse (ou à cœur) et en surface une couleur orange.

Le procédé de l'invention permet par l'incorporation de poudre d'oxyde de cérium (CeO2) dans le mélange à fritter, une diminution des températures de frittage et une amélioration des propriétés mécaniques (résistance aux chocs). L'oxyde de cérium agit aussi comme un des éléments déterminant dans la coloration orange que l'on souhaite donner au composant.

Selon l'invention, le premier mélange comprend entre 0.05% et 1% en poids de poudre d'oxyde de cérium (Ce+4 O2).

L'invention a également pour objet un composant horloger orange à base de zircone obtenu notamment selon le procédé conforme à l'invention, le composant étant constitué d'une pièce frittée à partir d'une pièce moulée comprenant une matrice d'oxyde de zirconium, 1% à 6% en poids d'oxyde d'yttrium, 0.1% à 5% d'oxyde d'aluminium, 0.05% à 1% en poids d'oxyde de cérium, et 0.05% à 1% en poids d'oxyde de magnésium.

De tels composants ont l'avantage de présenter un brillant intense après polissage et sont ainsi particulièrement adaptés à la réalisation de composants horlogers tels que des carrures, lunettes, couronnes, poussoirs, masse oscillante, ponts, platines ou encore des maillons de bracelet.

D'autres caractéristiques et avantages de l'invention apparaîtront à la lumière de la description qui suit d'un exemple de réalisation du procédé de l'invention.

Le procédé de fabrication de l'invention qui va maintenant être décrit en détail est celui qui permet de réaliser un composant à base de zircone frittée orange vif dont l'aspect et les propriétés mécaniques sont particulièrement adaptés à la réalisation de pièces constitutives de montres bracelet ou à la réalisation de tout autre article décoratif.

Le composant en zircone orange vif obtenu selon ce procédé comprend 87% à 98,8 % en poids de zircone stabilisée et le complément en poids c'est-à-dire 1,2 à 13 % en poids d'une phase vitreuse réalisée à base d'oxyde d'aluminium et d'oxyde d'yttrium seuls ou en combinaison, de 0.05% à 1 % en poids d'oxyde de cérium et de 0.05% à 1% en poids d'oxyde de magnésium.

La zircone est stabilisée de façon classique en phase tétragonale par au moins un stabilisant choisi parmi l'ensemble des oxydes comprenant l'oxyde d'yttrium, l'oxyde de magnésium, et l'oxyde de calcium seuls ou en combinaison.

L'oxyde de magnésium permet d'augmenter la clarté du composant obtenu, la couleur orange est alors plus vive, plus éclatante.

Pour réaliser ce composant, un procédé selon un premier mode de réalisation de l'invention comprend les étapes suivantes :
a) réaliser un premier mélange comprenant une poudre de zircone, 1% à 6% en poids d'oxyde d'yttrium, 0.1% à 5% d'oxyde d'aluminium, 0.05% à 1% en poids d'oxyde de cérium, et 0.05% à 1% en poids d'oxyde de magnésium ;
b) réaliser un deuxième mélange comprenant le premier mélange et un au moins un liant ;
c) réaliser un mélange poudre ou un mélange granulé à partir du deuxième mélange ;
d) former un corps vert à partir du mélange poudre ou mélange granulé ;
e) délianter le corps vert pour obtenir un corps brun ;
f) fritter le corps brun sous une atmosphère d'un gaz neutre pendant 30 minutes à 4 heures à une température comprise entre 1250°C et 1650°C pour former une ébauche de couleur orange ;
g) usiner l'ébauche obtenue pour obtenir le composant en céramique de couleur orange aux dimensions souhaitées.

On notera que toutes ces poudres doivent de préférence présenter une pureté supérieure à 95%.

Une fois le pesage des poudres effectué, les poudres sont mélangées et homogénéisées en milieu humide au moyen d'une barbotine par exemple. Dans la phase finale d'homogénéisation, on ajoute un liant.

On procède ensuite au séchage du mélange par exemple dans un atomiseur classique.

La poudre obtenue est tamisée pour conserver les particules ayant une granulométrie inférieure à 200µm. L'homme du métier pourra aussi obtenir des granules sans difficulté particulière.

La poudre est ensuite pressée dans un moule ayant la configuration du composant que l'on désire obtenir afin de former un corps vert de ce dernier.

Le corps vert est ensuite délianté de manière à éliminer le liant encore présent. Typiquement, le déliantage est un déliantage thermique ou un déliantage solvant. Dans le cas d'un déliantage thermique, ce dernier est effectué sous air. Le déliantage du corps vert permet d'obtenir un corps brun.

Le corps brun est ensuite placé dans un four de frittage. On notera à ce propos que le frittage est effectué sous pression partielle d'un gaz neutre. Le corps brun est alors chauffé dans une première phase à une vitesse de 100°C à 300°C par heure jusqu'à une température cible comprise entre 1250°C et 1650°C. Lors de la deuxième phase, le corps brun est maintenu à cette température cible pendant un temps compris entre trente minutes et quatre heures.

Le gaz neutre est choisi parmi l'argon, l'azote ou l'hélium, ou un mélange d'au moins deux de ces gaz neutres.

Une fois le frittage terminé la température est abaissé graduellement à raison de 100°C à 400°C par heure. On obtient alors une ébauche, ou le composant dans sa forme générale quasi finale, et la couleur de l'ébauche obtenue après l'opération de frittage est orange. On notera que la coloration est réalisée dans la masse si bien qu'une opération d'usinage du composant n'altère aucunement sa couleur.

Le frittage du corps brun est effectué dans une atmosphère d'argon ou d'azote selon la couleur orange souhaitée. En effet, les inventeurs ont constaté de manière surprenante que la teinte orange du composant final variait en fonction du gaz utilisé.

On peut également obtenir un tel composant horloger de couleur orange au moyen d'un frittage SPS (ou frittage flash).

Ainsi, le composant en céramique orange peut être obtenu via un procédé selon un second mode de réalisation de l'invention, et comprend les étapes suivantes :
- réaliser un premier mélange comprenant une poudre de zircone, 1 à 6% en poids d'oxyde d'yttrium, 0.1 à 5% d'oxyde d'aluminium, 0.05% à 1% en poids d'oxyde de cérium, et 0.05 à 1% en poids d'oxyde de magnésium ;
- mettre à disposition un moule ;
- déposer le mélange de poudres dans le moule ;
- effectuer un frittage de type flash ou SPS, opéré sous une atmosphère d'un gaz neutre et à une pression de frittage comprise entre 5N/mm2 et 250N/mm2, pendant un temps de cycle complet compris entre 10 min et 180 min, de sorte à former un composant en céramique de couleur orange ;
- démouler le composant de couleur orange obtenu ;
- effectuer une finition du composant de couleur orange en céramique ;
- optionnellement, usiner l'ébauche obtenue pour obtenir le composant horloger en céramique de couleur orange aux dimensions souhaitées.

De préférence, l'étape de frittage est effectuée à une température comprise entre 600°C et 1650°C pendant un temps compris entre 10 minutes et 180 minutes.

L'ébauche est usinée aux dimensions du composant souhaité.

Le procédé peut comprendre un usinage par ablation laser pour former des décors dans le composant. Les décors peuvent consister en des index, une graduation ou un logo par exemple.

Après l'usinage par ablation laser, le procédé de fabrication comporte une étape de finition (ou de terminaison) telle que du polissage, du satinage, de la matification, etc...

Éventuellement, l'ébauche obtenue peut être usinée pour obtenir le composant horloger en céramique de couleur orange aux dimensions souhaitées.

Les exemples ci-après illustrent le procédé selon l'invention et le matériau qui en est issu.

### Exemple 1 (en poids).

Le mélange de poudres comporte en poids de la zircone à 93,95%, de l'oxyde d'yttrium à 5%, de l'oxyde d'aluminium à 0.25%, de l'oxyde de cérium à 0.6%, et de l'oxyde magnésium à 0.2%. L'ébauche a été frittée à 1400°C sous un flux d'argon pendant 60 minutes et le composant obtenu présente une couleur orange.

### Exemple 2 (en poids).

Le mélange de poudres comporte en poids de la zircone à 88,65%, de l'oxyde d'yttrium à 6%, de l'oxyde d'aluminium à 5%, de l'oxyde de cérium à 0.25%, et de l'oxyde de magnésium à 0.1%. L'ébauche a été frittée à 1650°C sous un flux d'azote pendant 90 minutes et le composant obtenu présente une couleur orange.

## Revendications

1. Composant horloger en céramique orange, le composant comprenant de la zircone présente en poids entre 87% et 98.8%, de l'oxyde d'yttrium présent en poids entre 1 et 6%, de l'oxyde d'aluminium présent en poids entre 0.1% et 5%, de l'oxyde de cérium présent en poids entre 0.05% et 1%, et de l'oxyde de magnésium présent en poids entre 0.05% et 1%.

2. Procédé de fabrication d'un composant horloger de couleur orange à base de zircone selon la revendication 1, le procédé comprenant les étapes suivantes :
- réaliser un premier mélange comprenant une poudre de zircone, 1 à 6% en poids d'oxyde d'yttrium, 0.1 à 5% d'oxyde d'aluminium, 0.05% à 1% en poids d'oxyde de cérium, et 0.05 à 1% en poids d'oxyde de magnésium ;
- réaliser un deuxième mélange comprenant le premier mélange et au moins un liant ;
- réaliser un mélange poudre ou un mélange granulé à partir du deuxième mélange ;
- former un corps vert à partir du mélange poudre ou mélange granulé;
- délianter le corps vert pour obtenir un corps brun ;
- fritter le corps brun sous une atmosphère de gaz neutre pour former une ébauche de couleur orange ;
- usiner l'ébauche obtenue pour obtenir le composant horloger en céramique de couleur orange.

3. Procédé de fabrication d'un composant horloger de couleur orange à base de zircone selon la revendication 1, le procédé comprenant les étapes suivantes :
- réaliser un premier mélange comprenant une poudre de zircone, 1 à 6% en poids d'oxyde d'yttrium, 0.1 à 5% d'oxyde d'aluminium, 0.05% à 1% en poids d'oxyde de cérium, et 0.05 à 1% en poids d'oxyde de magnésium ;
- mettre à disposition un moule ;
- déposer le mélange de poudres dans le moule ;
- effectuer un frittage de type flash ou SPS, opéré sous une atmosphère de gaz neutre et à une pression de frittage comprise entre 5N/mm2 et 250N/mm2, pendant un temps de cycle complet compris entre 10 min et 180 min, de sorte à former un composant en céramique de couleur orange ;
- démouler le composant de couleur orange obtenu ;
- effectuer une finition du composant de couleur orange en céramique ;
- usiner l'ébauche obtenue pour obtenir le composant horloger en céramique de couleur orange.

4. Procédé de fabrication selon la revendication 2, **caractérisé en ce que** l'étape de frittage est effectuée à une température comprise entre 1250°C et 1650°C pendant un temps compris entre 30 minutes et 4 heures.

5. Procédé de fabrication selon la revendication 3, **caractérisé en ce que** l'étape de frittage est effectuée à une température comprise entre 600°C et 1650°C pendant un temps compris entre 10 minutes et 180 minutes.

6. Procédé de fabrication selon l'une des revendications 2 à 5, **caractérisé en ce que** le gaz neutre est choisi parmi l'argon, l'azote ou l'hélium, ou un mélange d'au moins deux de ces gaz neutres.

7. Procédé selon la revendication 2, **caractérisé en ce que** l'étape de déliantage est un déliantage thermique ou un déliantage solvant.

8. Procédé selon la revendication 7, **caractérisé en ce que** l'étape de déliantage thermique est effectuée sous air.

9. Composant horloger en céramique orange obtenu selon le procédé selon la revendication 1, **caractérisé en ce que** le composant horloger est un composant horloger d'habillage ou du mouvement.

10. Composant horloger selon la revendication 9, **caractérisé en ce que** le composant horloger d'habillage ou du mouvement est choisi parmi la liste comprenant une carrure, un fond, une lunette, un insert de lunette, un poussoir, une couronne, un maillon de bracelet, une boucle, un cadran, une aiguille, un index de cadran, une masse oscillante et une platine.
